# EUROPÄISCHE PATENTSCHRIFT

(11) **EP 3 195 052 B1**
(45) Veröffentlichungstag und Bekanntmachung des Hinweises auf die Patenterteilung: **08.07.2020**
(21) Anmeldenummer: 15786859.7
(22) Anmeldetag: 16.09.2015
(51) Int. Cl.: G02C 13/00

(54) **VERFAHREN ZUR MESSGENAUEN BESTIMMUNG VON ZENTRIERTDATEN EINES PROBANDEN ZUR ANPASSUNG EINER BRILLE AN DEN PROBANDEN UND IMMOBILES VIDEOZENTRIERSYSTEM**
METHOD FOR DETERMINING CENTERING DATA OF A TEST SUBJECT WITH MEASUREMENT ACCURACY IN ORDER TO ADAPT A PAIR OF EYEGLASSES TO THE TEST SUBJECT, AND IMMOBILE VIDEO CENTERING SYSTEM
PROCÉDÉ DE DÉTERMINATION PRÉCISE DE DONNÉES DE CENTRAGE D'UN SUJET POUR AJUSTER DES LUNETTES AU SUJET ET SYSTÈME DE CENTRAGE VIDÉO IMMOBILE

(30) Priorität: 16.09.2014 DE 102014013447
(43) Veröffentlichungstag der Anmeldung: 26.07.2017
(73) Patentinhaber: Ollendorf, Hans-Joachim, 39517 Brunkau (DE)
(72) Erfinder: Ollendorf, Hans-Joachim, 39517 Brunkau (DE)
(74) Vertreter: Patentanwälte Schuster, Müller & Partner mbB
(86) Internationale Anmeldenummer: PCT/DE2015/000446
(87) Internationale Veröffentlichungsnummer: WO 2016/041536

(56) Entgegenhaltungen:
- EP-B1- 1 844 363
- DE-A1-102010 007 922
- DE-A1-102011 115 239

## Beschreibung

### Stand der Technik

Die Erfindung geht aus von einem Verfahren zur messgenauen Bestimmung von Zentrierdaten eines Probanden zur Anpassung einer Brille an den Probanden nach der Gattung des Oberbegriffs des Anspruchs 1 sowie von einem immobilen Videozentriersystem zur Bestimmung von Zentrierdaten eines Probanden zur Anpassung einer Brille an den Probanden nach der Gattung des Oberbegriffs des Anspruchs 2.

Verfahren zur messgenauen Bestimmung von Zentrierdaten eines Probanden sowie immobile Videozentriersysteme zur Bestimmung von Zentrierdaten eines Probanden sind bereits Stand der Technik. So ist beispielsweise eine Vorrichtung und ein Verfahren zum Bestimmen von optischen Parametern eines Benutzers bekannt, wobei bei dem Verfahren Bilddaten zumindest von Teilbereichen des Kopfes des Benutzers aus zumindest zwei unterschiedlichen Aufnahmerichtungen erzeugt werden. Aus diesen werden Benutzerdaten zumindest eines Teilbereiches des Kopfes oder zumindest eines Teilbereiches eines aus dem Kopf des Benutzers und einer an diesem in Gebrauchsstellung angeordneten Brille bestehenden Systems bestimmt, wobei die Benutzerdaten Ortsinformationen im dreidimensionalen Raum von vorbestimmten Punkten des Teilbereichs des Kopfes oder des Teilbereichs des Systems umfassen. Anhand der Benutzerdaten wird zumindest ein Teil der optischen Parameter des Benutzers bestimmt, die abschließend ausgegeben werden. Die Vorrichtung zur Durchführung eines solchen Verfahrens weist zumindest zwei Bildaufnahmeeinrichtungen, eine Datenverarbeitungseinrichtung und eine Datenausgabeeinrichtung auf. Die Bildaufnahmeeinrichtungen sind so ausgelegt, dass sie jeweils Bilddaten zumindest von Teilbereichen des Kopfes des Benutzers erzeugen. Ihre effektiven optischen Achsen schneiden sich unter einem Schnittwinkel zwischen 10° und 60° oder ihr kleinster Abstand beträgt weniger als 10 cm, wobei sich die Projektion der effektiven optischen Achsen auf eine Horizontalebene unter einem Winkels von 10° bis 60° schneiden und sich die Projektion der effektiven optischen Achsen auf eine Vertikalebene parallel zu einer der effektiven optischen Achsen unter einem Winkels von 10° bis 60° schneiden.

Die Datenverarbeitungseinrichtung weist eine Benutzerdatenbestimmungseinrichtung, die ausgelegt ist, anhand der erzeugten Bilddaten Benutzerdaten zumindest eines Teilbereichs des Kopfes oder zumindest eines Teilbereiches eines aus dem Kopf des Benutzers und einer an diesem in Gebrauchsstellung angeordneten Brille bestehenden Systems zu bestimmen. Zu der Datenverarbeitungseinrichtung gehört ferner eine Parameterbestimmungseinrichtung, die ausgelegt ist, anhand der Benutzerdaten zumindest einen Teil der optischen Parameter des Benutzers zu bestimmen. Vorteilhafterweise handelt es sich bei der Datenverarbeitungseinrichtung um einen Computer oder Mikroprozessor, der beide Aufgaben, also die Benutzerdatenbestimmung und die Parameterbestimmung ausführt. Die Datenausgabeeinrichtung gibt zumindest einen Teil der bestimmten optischen Parameter des Benutzers aus (EP 1 844 363 B1).

Der Nachteil dieses Verfahrens besteht darin, dass es Bilder aus in der Höhe unterschiedlichen Positionen zum Gesicht des Benutzers erfordert und daher die Kameras in unterschiedlicher Höhe zum Benutzer angeordnet und ihre effektiven optischen Achsen unter bestimmten Winkeln auf das Gesicht des Benutzers, insbesondere dessen Nasenwurzel ausgerichtet sein müssen, wobei die optische Achse einer Kamera immer in Nullblickrichtung ausgerichtet sein muss. Bei Verwendung nur einer Kamera muss die Bildaufnahme mit einer entsprechenden optischen Umlenkeinrichtung versehen sein. Außerdem muss der Spiegel für die hinter ihm angeordnete Kamera halbdurchlässig sein. Zudem erfordert diese Vorrichtung mit weniger als 20 cm eine verhältnismäßig dichte Positionierung des Gesichts des Probanden vor dem Spiegel, die nicht der natürlichen Fernsichtsituation entspricht. In der Praxis ist eine solch genaue Positionierung nur schwer einzuhalten und bedeutet immer eine gewisse Beeinflussung des Probanden, so dass eine der wesentlichen Voraussetzungen für eine zuverlässige Bestimmung der Parameter, nämlich eine ungezwungene habituelle Kopf- und Körperhaltung des Probanden, ebenfalls nur schwer zu erreichen ist.

Ein weiterer wesentlicher Nachteil dieses Verfahrens ist der hohe händische Aufwand und der entsprechend hohe Zeitaufwand sowohl für den Bediener als auch für den Probanden, da dem System keinerlei Messpunkte automatisch zur Verfügung stehen, diese müssen alle manuell vom Bediener auf dem Monitor markiert werden.

Bekannt ist ferner ein In situ-Videozentriersystem mit Gesichtsfeldbewertung eines Probanden zur Bestimmung von Zentrierdaten einer Brille mit einer bildgebenden Einheit, einer Kameraeinheit und einer softwaretechnischen Auswerteeinheit für die Videoaufnahmen. Die bildgebende Einheit, beispielsweise ein Bildschirm, ist in Kopfhöhe eines Probanden angeordnet. An ihrer rechten und linken Seite ist, für den Probanden nicht wahrnehmbar, jeweils mindestens eine Kamera angeordnet. Über die bildgebende Einheit werden dem Probanden Darstellungen wiedergegeben, die das visuelle Interesse des Probanden wecken, so dass dieser, um das Geschehen auf dem Bildschirm zu verfolgen, automatisch und von seinem Sehvermögen her veranlasst ist, bestimmte Entfernungen und Haltungen zum Bildschirm einzunehmen, also seine Blicke und/oder Kopfbewegungen unaufgefordert, allein durch das Verfolgen der Darstellungen auf dem Bildschirm in die zur Bestimmung der Zentrierdaten der Brille erforderlichen Richtungen bzw. Positionen lenkt (WO 2011/131169 A1). Dadurch wird zwar eine für den Probanden angenehme, ungezwungene und nicht durch Anweisungen eines Optikers ggf. als störend empfundene In situ-Situation geschaffen, jedoch erfordert diese immerhin eine bestimmte Konzentration des Probanden bei der Verfolgung der Darstellungen. Zu dem ist das Verfahren sehr zeitaufwändig, da zur Bestimmung der Zentrierdaten unterschiedliche Pupillenpositionen aufgenommen werden müssen und deshalb der Proband über einen längeren Zeitraum animiert wird, seine Blickrichtung zu ändern. Außerdem ist das Videozentriersystem aufgrund der Bereitstellung eines Bildschirms und der die Aufmerksamkeit des Probanden fordernden Darstellungen an sich immer noch verhältnismäßig aufwändig.

Bekannt ist auch ein Videozentriersystem und Verfahren zur Bestimmung von Zentrierdaten für Brillengläser. Dieses mobile Videozentriersystem besteht aus mindestens einer Bilderfassungseinrichtung (Stereokamerasystem mit festen optischen Achsen), einer Bildverarbeitungseinheit mit Computer und einer Bedieneinheit, wobei alle Bestandteile in einem mobilen Gehäuse integriert sind. Auf der dem Probanden zugewandten Seite des Videozentriersystems befindet sich außerdem ein Bildschirm zur Darstellung von Sehzeichen. Bei dem Verfahren zur Bestimmung von Zentrierdaten für Brillengläser werden zusätzliche Visierlinien bei unterschiedlichen Blicksituationen des Probanden in Relation zum Brillengestell ermittelt. Hierzu wird das Videozentriersystem von einem Bediener in die für die Blicksituation charakteristische Position gebracht und, unterstützt durch eine an der dem Bediener zugewandten Rückseite der Vorrichtung angeordnete Anzeige nach Überprüfung und ggf. Korrektur der Position, alle Bilderfassungseinrichtungen gleichzeitig ausgelöst (DE 10 2011 009 646 A1). Zur Durchführung des Verfahrens ist eine Kalibrierung der Bildaufnahmevorrichtungen bzw. ein Einstellen des Gesamtsystems vor dem Aufnehmen bzw. während des Aufnehmens der Bilder nötig. Nachteilig ist ferner, dass das Videozentriersystem immer in Höhe des Gesichts des Probanden gehalten werden muss.

Ebenfalls bekannt sind stereoskopische Messverfahren, die bei bestimmten klar definierten geometrischen Körpern, beispielsweise Werkstücken wie Dreh- oder Frästeile eine vollautomatische dreidimensionale Vermessung ermöglichen.

Die üblichen Verfahren der stereoskopischen dreidimensionalen Vermessung von in zwei zweidimensionalen Bildern (Stereobildern) abgebildeten dreidimensionalen Körpern (beispielsweise mit Algorithmen zur Korrelationsbestimmung und Funktionen der Epipolar-Geometrie) führen in dem Fall der Aufgaben der Videozentrierung aus hauptsächlich zwei Gründen nicht zum Erfolg:
1. Die bekannten Verfahren der stereoskopischen Vermessung benötigen auf beiden zweidimensionalen Darstellungen (Bildern) eindeutig zuordenbare Punkte, die exakt die gleiche Position auf dem dreidimensionalen Körper haben, beispielsweise die Ecke eines Quaders. Die ist bei den auszumessenden Objekten Brillenfassung und menschliches Auge in erster Näherung nicht gegeben.
2. Die Messaufgabe Videozentrierung bedeutet die Bestimmung des Glasdurchblickpunktes bei Nullblickrichtung des Probanden. Diese Nullblickrichtung wird bei üblichen Stereokamerasystemen auf den beiden zweidimensionalen Darstellungen (Bildern) nicht abgebildet, da dafür mittels mechanischer und elektronischer steuerungstechnischer Mittel sichergestellt werden müsste, dass sich das Kamerasystem auf Augenhöhe des Probanden befindet, was wiederum mit hohem Aufwand verbunden ist.

Schließlich sind ein Verfahren, eine Vorrichtung und ein Computerprogrammprodukt zur Bestimmung von individuellen Parametern eines Brillenträgers bekannt. Bei diesem Verfahren werden die optischen Benutzerdaten mittels mehrerer, mit einem äquidistanten Abstand zueinander, übereinander angeordneter Bildaufnahmevorrichtungen bestimmt. Dabei sind die optischen Achsen der direkt übereinander angeordneten Bildaufnahmevorrichtungen parallel zueinander ausgerichtet (DE 10 2012 007 831 A1). Für die Aufnahmen wird bevorzugt ein spezieller Raum, in dem die Bildaufnahmevorrichtungen angeordnet und ausgerichtet sind, benötigt.

Der Erfindung liegt daher die Aufgabe zugrunde, ein Verfahren zur messgenauen Bestimmung von Zentrierdaten eines Probanden zur Anpassung einer Brille an den Probanden zu entwickeln, das eine kürzere Mess-Zeit und weniger Aktivitäten sowohl des Bedieneden als auch des Probanden erfordert. Die bekannten immobilen Videozentriersysteme zur Bestimmung von Zentrierdaten eines Probanden zur Anpassung einer Brille an den Probanden sollen so verändert werden, dass sie einen geringen Aufwand erfordern und ein den Probanden wenig in Anspruch nehmendes Messverfahren ermöglichen.

### Die Erfindung und ihre Vorteile

Das erfindungsgemäße Verfahren zur messgenauen Bestimmung von Zentrierdaten eines Probanden zur Anpassung einer Brille an den Probanden mit den Merkmalen des Anspruchs 1 hat demgegenüber den Vorteil, dass es zur Ermittlung der Zentrierdaten der Brille nur einer Aufnahme oder nur einer kurzen Bildfolge von dem Gesicht oder dem von der Brille eingenommenen Bereich des Gesichts des Probanden bedarf, nachdem der Proband sich selbst in dem Spiegel, wie er bereits bei aus dem Stand der Technik bekannten Vorrichtungen zur Durchführung ähnlicher Verfahren verwendet wird, in die Augen schaut, wodurch die für die Bildaufnahme erforderliche Nullblickrichtung (waagerechte Blickrichtung Ferne) quasi automatisch vom Probanden eingenommen wird. Durch die gleichzeitige Auslösung der mindestens zwei Kameras des Stereokamerasystems reduzieren sich die Messzeit und damit die zeitliche Belastung für den Probanden deutlich.

Zu dem erfindungsgemäße Verfahren gehört auch, dass die Kennwerte und spezifischen Abbildungseigenschaften der mindestens zwei Kameras des Stereokamerasystems einschließlich ihrer Abbildungsfehler, beispielsweise Verzerrungen, ermittelt und mittels eines physikalisch-mathematischen Modells als Korrekturwerte, beispielsweise in Form einer Wertetabelle, in der Software der Datenverarbeitungs- und Datenanzeigeeinrichtung hinterlegt werden. Die Bestimmung der Kamerakennwerte ist auf einfache Weise mit einer geeigneten Messanordnung und/oder einem geeigneten Messverfahren umsetzbar, da die spezifischen Abbildungseigenschaften der Kameras den Gesetzen der Trigonometrie (Strahlensatz) folgen. Zu den spezifischen Abbildungseigenschaften gehören die Abbildungsgröße der Brille sowie die Lage der konkreten (diskreten) Höhenbereiche der Brille im Abbildungsbereich der Kameras jeweils in Abhängigkeit der Entfernung der Brille von der Objektivebene der mindestens zwei Kameras. Die Kennwerte 'Brennweite', 'Position der Kameras zueinander' sowie 'Entfernungsbereich' sind derart ausgelegt, dass im Messbereich jeder Punkt im Raum von beiden Kameras erfasst wird. Die in der Software hinterlegten Korrekturberechnungen ermöglichen es, beispielsweise die Glasdurchblickspunkte in der waagerechten Blickrichtung des Probanden zu ermitteln, obwohl diese auf den von den Kameras aufgenommenen Bildern nicht abgebildet werden.

Prinzip des erfindungsgemäßen Verfahrens:
Die als Stereokamerasystem ausgebildeten elektronischen Kameras sind während des Herstellungsprozesses des Systems mittels eines Kalibrierungsverfahrens in ihrer optischen und elektronischen Wirkungsweise sowie in ihrer räumlichen Position zueinander genauestens bestimmt.

Die stereoskopischen Einzelbilder des Objektes (Brillenfassung) werden durch die auswertende Software in Hinsicht auf bekannte Merkmale wie Brillenfassungsform oder Teile der Brillenfassungsform hin untersucht. Hierfür stehen drei Fälle zur Verfügung:
1. In dem Falle, dass für den konkreten Vermessungsfall die konkrete Brillenfassungsform als Konstruktions- oder Messdatensatz zu Verfügung steht, wird im weiteren Verfahrensablauf auf diese zurückgegriffen.
2. Ist dieses nicht der Fall, vergleicht die Auswertesoftware automatisch gut erkennbare Brillenfassungsformteile mit den in der Datenverarbeitungs- und Datenanzeigeeinrichtung hinterlegten allgemeinen Brillenfassungsdatenbank, in der typische Brillenfassungsformen enthalten sind, und wählt die formseitig am weitgehendsten übereinstimmende Brillenfassungsform aus der Datenbank für den weiteren Verfahrensablauf aus.
3. Ist auch das nicht möglich, zum Beispiel aus dem Grund, dass die durch die Software ermittelten Brillenfassungsformmerkmale (Kanten) unzureichend sind, um eine Brillenfassungsform aus der allgemeinen Brillenfassungsdatenbank zuzuordnen, so werden durch die Software aus den ermittelten Brillenfassungsformkanten die Merkmale ermittelt, die für die Vermessung der Zentrierdaten notwendig sind.

Die dadurch im Detail bekannte komplette Brillenfassungsform oder im Fall 3 die ermittelten Merkmale wird/werden in den stereoskopischen Einzelbildern durch die Auswertesoftware in allen drei Raumachsen lagerichtig derart eingepasst, dass beispielsweise eine horizontale Verkürzungen der Abbildung durch horizontale Verdrehung des einzupassenden Objektes realisiert wird.

Die dadurch im Detail bekannten Merkmale der eingepassten Brillenfassungsformen in den einzelnen stereoskopischen Bildern werden mit den Mitteln der stereoskopischen Messtechnik, beispielsweise der Vermessung mittels Epipolarlinien, herangezogen.

In Vorbereitung der Ermittlung der zwischen Brillenfassung und Pupillen des Probanden zu bestimmenden Glasdurchblickspunkte bei Nullblickrichtung werden in den stereoskopischen Einzelbildern die Strecken zwischen den Pupillenmitten und den im Detail bekannten Merkmalen der in den stereoskopischen Einzelbildern eingepassten Brillenfassungsformen vermessen.

Mit diesen bis hierhin geschilderten Methoden und damit ermittelten Werten ist die Auswertesoftware in der Lage, ein stereoskopisches dreidimensionales Modell der Brillenfassung einschließlich der Pupillenmitten des Probanden zu erstellen.

Da die konstruktiven Details, wie beispielsweise die konstruktiv bekannten Abstände, und Lage der oben genannten Merkmale der Brillenfassung bekannt sind, bestimmt aus dem dreidimensionalen Modell heraus die Auswertesoftware auch die Lage der Kameras zur Brillenfassung, beispielsweise die Entfernung und die relative Höhe der Brillenfassung zum Stereokamerasystem.

Im üblichen Aufnahmefall ist die Kamerahöhe nicht gleich der Pupillenhöhe, die in den stereoskopischen Einzelbildern sichtbaren (scheinbaren) Glasdurchblickspunkte entsprechen höhenmäßig deshalb nicht den wirklichen Glasdurchblickspunkten, sondern liegen beispielsweise, wenn die Kamera tiefer als die Pupillenhöhe ist, ebenfalls tiefer.

Da im dreidimensionalen Modell außer der Lage der Brillenfassung und der Kameras auch die Lage der Pupillen und damit der Augendrehpunkte bekannt ist, berechnet die Auswertesoftware mit trigonometrischen Methoden die Glasdurchblickpunkte bei Nullblickrichtung.

Im stereoskopischen Aufnahmefall liegen die Kameras in horizontaler Richtung nicht in Blickrichtung des Probanden, sondern jeweils seitlich nach außen außerhalb dessen Blickrichtung.

Die in den stereoskopischen Einzelbildern sichtbaren (scheinbaren) Glasdurchblickspunkte entsprechen horizontal deshalb nicht den wahren Glasdurchblickspunkten, sondern liegen seitlich versetzt.

Die Auswertesoftware berechnet mit trigonometrischen Methoden (Strahlensatz zwischen Blickrichtung des Probanden und Aufnahmestrahl der Kamera) die Glasdurchblickspunkte entsprechend der Blickrichtung in Mitte des Spiegels zwischen den Kameras.

Das erfindungsgemäße Verfahren läuft in Anwesenheit des Probanden folgendermaßen ab:
Der Proband befindet sich mit einer anatomisch gut angepassten Brillenfassung vor dem Stereokamerasystem und dem Spiegel in einem Entfernungsbereich zwischen 0,5 m und 1 m (etwa Armeslänge), so dass er von beiden Kameras erfasst wird. Er wird angehalten, sich selbst in die Augen zu sehen. Dadurch wird, wie oben bereits erwähnt, beim Probanden eine ungezwungene Kopf- und Körperhaltung erreicht und der Blick des Probanden im doppelten Abstand zum Spiegel in der virtuellen Bildebene in Nullblickrichtung fixiert. Diese ungezwungene natürliche Kopfhaltung bei gleichzeitiger waagerechter Blickrichtung ist erwünscht bzw. im bestimmten Maße für eine genaue Messung erforderlich. Eine Videozentriereinrichtung, in der das erfindungsgemäße Verfahren durchgeführt werden kann, ist weiter unten beschrieben.

Es wird eine synchrone Aufnahme zumindest des von der Brillenfassung eingenommenen Bereichs des Gesichts des Probanden von allen Kameras des Stereokamerasystems gleichzeitig durchgeführt.

Die Software ermittelt durch Auswertung der Lage der Brillenfassungsformen im Abbildungsbereich der Aufnahmen unter Verwendung der oben beschrieben hinterlegten Korrekturdaten, Abbildungsmaßstäbe und Lageinformationen die Richtung, die Entfernung und die höhenmäßige Lage der Merkmale. Hiermit sind alle Randbedingungen der Aufnahme bekannt, so dass anderweitige Bildinformationen des Objektes, beispielsweise die Lage der Pupillenmitten des Probanden, zu geometrischen Messungen verwendet werden, da alle vorhandenen lagebedingten und richtungsbedingten Größenänderungen und Verzerrungen durch Korrekturrechnungen gegengerechnet werden können.

Das erfindungsgemäße immobile Videozentriersystem mit den Merkmalen des Anspruchs 2 hat gegenüber dem oben beschriebenen Stand der Technik den Vorteil, dass es sehr einfach aufgebaut ist, unabhängig von der Größe des Probanden ohne bewegliche Kameras und auch ohne optische Animationen für den Probanden auskommt. Die Bestimmung der Zentrierdaten der Brille ist ohne eine Ausrichtung der Kameras auf die Augenhöhe des Probanden möglich. Die verwendeten Kameras erfassen aufgrund ihres Öffnungswinkels unterschiedliche Körpergrößen von Probanden, ohne dass sie exakt in dessen Kopfhöhe angeordnet oder auf diese eingestellt werden müssten. Durch die Verwendung lediglich eines einfachen Spiegels, der nicht halbdurchlässig sein muss, braucht sich der Proband lediglich auf sein eigenes Spielbild zu konzentrieren, das sich in gleicher Entfernung zu seinem Abstand vor dem Spiegel in der virtuellen Bildebene hinter dem Spiegel befindet. Durch seine automatische Konzentration auf sein Spiegelbild, insbesondere auf die neue Brillenfassung, schaut er sich selbst in die Augen und gewährleistet so die erforderliche Nullblickrichtung. Auch das trägt zur Reduzierung der Messzeit und damit der zeitlichen Belastung für den Probanden bei. Ein zusätzlicher Vorteil des Videozentriersystems besteht darin, dass es hinsichtlich der Einhaltung des Abstands des Probanden zum Spiegel nicht so empfindlich ist wie das bei der im Stand der Technik erstgenannten Veröffentlichung der Fall ist. Wie oben erwähnt kann er Abstand im Bereich zwischen 0,5 und 1 m variieren.

Ein besonderer Vorteil der erfindungsgemäßen Ausführung ohne höhenmäßig verfahrende Kameras ist auch darin zu sehen, dass es dadurch möglich ist, die Aufnahmeeinrichtung in sehr flacher Bauart auszuführen, so dass diese beispielsweise wie ein üblicher Spiegel im Ladengeschäft des Augenoptikers verbaut, zum Beispiel an eine Wand gehängt oder auf einem Tisch aufgestellt werden kann.

Diese Vorteile des erfindungsgemäßen immobilen Videozentriersystems werden dadurch erreicht, dass als elektronische Bildaufnahmeeinrichtung ein Stereokamerasystem verwendet wird, das aus mindestens zwei Kameras besteht, die in ihrer elektronischen Wirkungsweise und optischen Abbildungseigenschaften genauestens bekannt sind. Die diesbezüglichen Kennwerte sind in der zum Videozentriersystem gehörenden Datenverarbeitungs- und Datenanzeigeeinrichtung abgelegt.

Die Kameras sind in gleicher Höhe und in einem definierten horizontalen Abstand zueinander in Höhe des Spiegels jeweils symmetrisch zu dessen mittlerer Längsachse fest angeordnet, d. h. sie sind in ihrer Lage, in ihrem definierten horizontalen Abstand zueinander und in ihrer Ausrichtung bezüglich der Position des Probanden sowie auch in Bezug auf den Spiegel im Raum definiert fixiert. Ihre definierten optischen Achsen sind genau waagerecht in Richtung des Probanden ausgerichtet, so dass das Blickfeld beider Kameras zumindest den mit der Brille bedeckten Teil des Gesichts des Probanden erfasst. Diese Fixierung ist zur Ermittlung der Zentrierdaten der Brille erforderlich, um durch evtl. unbeabsichtigt veränderte geometrische Verhältnisse Messfehler auszuschließen. Selbstverständlich ist es auch möglich, die Kameras in ihrer horizontalen Position und Ausrichtung auf den Probanden beweglich anzuordnen. Dann allerdings muss nach ihrer Positionierung und Ausrichtung ihre sichere Arretierung gewährleistet sein. Die Brennweite der Kameras, ihr horizontaler Abstand und der Entfernungsbereich zum Probanden sind so gewählt, dass im Messbereich jeder Punkt im Raum von den mindestens zwei in gleicher Höhe beiderseits des Spiegels angeordneten Kameras erfasst wird.

Nach einer vorteilhaften Ausgestaltung der Erfindung befinden sich die Kameras in der mittleren Höhe des Spiegels. Da dieser mit seiner mittleren Höhe bereits auf die durchschnittliche Augenhöhe von erwachsenen Personen eingerichtet ist, erfassen die Kameras auf jeden Fall den Augenbereich von kleineren und größeren Personen. Kinder müssen ggf. auf einen Schemel gestellt oder einen höheren Hocker gesetzt werden.

Nach einer anderweitigen vorteilhaften Ausgestaltung der Erfindung weisen die Kameras eine feste Brennweite auf. Dadurch werden unbeabsichtigte Verstellungen, die ggf. bei Zoom-Objektiven auftreten können und zu fehlerhaften Messergebnissen führen, vermieden. Außerdem sind Kameras mit fester Brennweite preisgünstiger. Für eine einfachere Auswertung der Bilder und auch einfachere Berechnung der Messwerte ist es vorteilhaft, Kameras mit gleicher Brennweite zu verwenden.

Nach einer zusätzlichen vorteilhaften Ausgestaltung der Erfindung sind die optischen Achsen der Kameras in der horizontalen Ebene in einem definierten Winkel geringfügig gegeneinander ausgerichtet. Günstigerweise sollte dieser Winkel zwischen 4° und 12° liegen. Dadurch wird eine Verbreiterung der Überlagerung ihrer beiden Blickfelder erreicht.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: eine Seitenansicht der erfindungsgemäßen Messsituation,
- Fig. 2: eine Draufsicht der erfindungsgemäßen Messsituation,
- Fig. 3: eine Seitenansicht der Messsituation aus Fig. 1 mit einem Probanden unterhalb der Kamerahöhe und
- Fig. 4: ein Bild eines Probanden mit Brillenfassung und spezifischen Brillenfassungsmerkmalen.

### Beschreibung der Ausführungsbeispiele

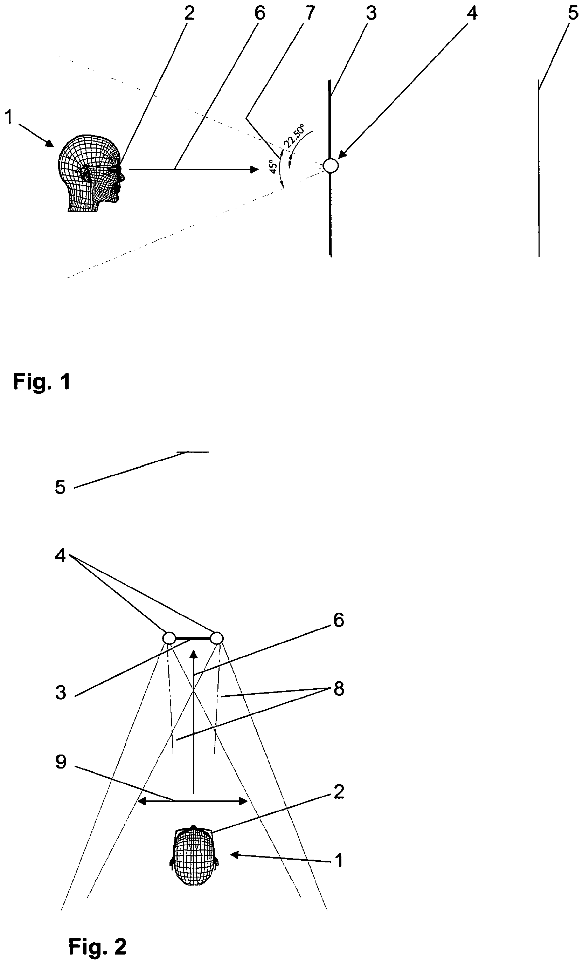

Fig. 1 zeigt die prinzipmäßige Darstellung des erfindungsgemäßen immobilen Videozentriersystems in einer Seitenansicht. Ein Proband 1 mit seiner ausgewählten und anatomisch gut angepassten Brillenfassung 2 steht vor einem in Kopfhöhe senkrecht angeordneten Spiegel 3, in dessen mittlerer Höhe sich ein im vorliegenden Beispiel aus zwei Kameras bestehendes Stereokamerasystem 4 befindet, deren beiden Kameras beiderseits des Spiegels 3 in gleicher Höhe sowohl zueinander als auch in Relation zum Spiegel 3 fest angeordnet sind (Fig. 2). Die Entfernung zwischen Proband 1 und Spiegel 3 bzw. Stereokamerasystem 4 beträgt im vorliegenden Beispiel ca. 1 m. In gleicher Entfernung hinter dem Spiegel 3 entsteht für den in den Spiegel schauenden Probanden 1 eine virtuelle Bildebene 5. Der Proband 1 schaut in waagerechter Richtung, der sog. Nullblickrichtung 6 in den Spiegel 3. Das vertikale Blickfeld 7 der beiden Kameras ist durch ihren vertikalen Öffnungswinkel bestimmt, der im vorliegenden Beispiel 45° beträgt. Wie aus Fig. 2 erkennbar, sind die beiden Kameras im vorliegenden Beispiel in der horizontalen Ebene mit ihren in Richtung des Probanden 1 weisenden optischen Achsen 8 in einem Winkel von 6° aufeinander zu angeordnet. Dadurch vergrößert sich das gemeinsame Blickfeld beider Kameras, das als ein Doppelpfeil mit der Ziff. 9 versehen ist. Die Breite des Spiegels 3 entspricht im vorliegenden Beispiel etwa der Breite des Kopfes des Probanden 1. Dadurch positioniert sich der Proband 1 automatisch etwa in einem mittig zwischen den beiden Kameras befindlichen Bereich, was wiederum die mathematische Auswertung der Bilder vereinfacht.

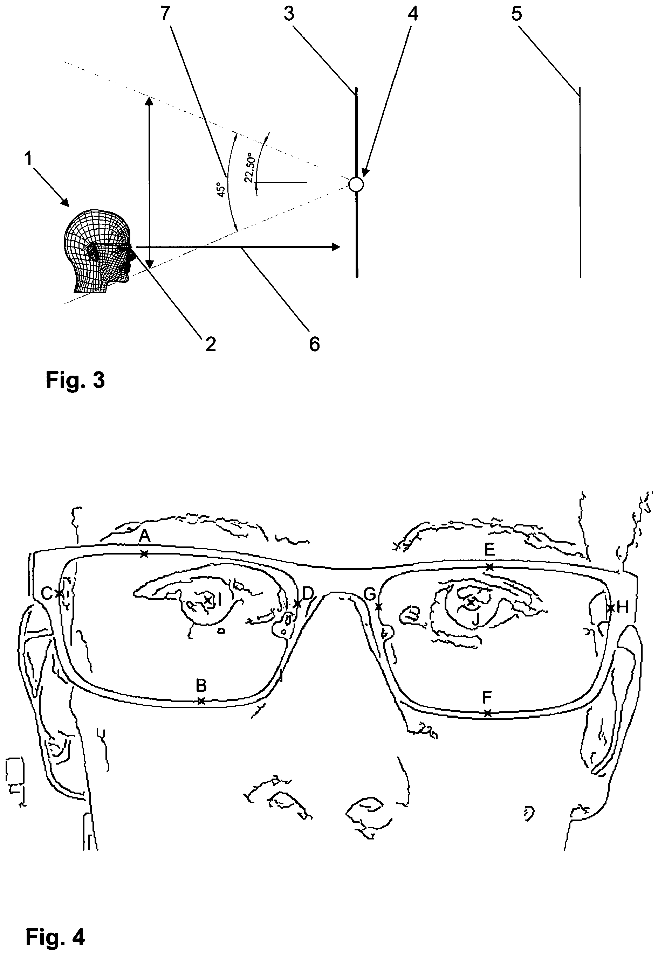

Fig. 3 zeigt die gleiche Ansicht des erfindungsgemäßen immobilen Videozentriersystems wie Fig. 1, mit dem Unterschied, dass der Proband 1 kleiner ist als der aus Fig. 1, d. h. sein Kopf sich im unteren Bereich des vertikalen Blickfelds 7 der Kameras befindet.

Fig. 4 zeigt den Probanden 1 mit aufgesetzter Brillenfassung 2 und der Kennzeichnung einer Auswahl von Messpunkten A bis H der für die Vermessung zum Zwecke der Videozentrierung relevanten Brillenfassungsmerkmale sowie der Pupillenmitten I und J der Augen des Probanden 1.

Die Messpunkte stehen für folgende Merkmale der eingepassten Brillenfassungsformen:
- A: Äußerer Punkt innere Brillenfassungskante oben rechts
- B: Äußerer Punkt innere Brillenfassungskante unten rechts
- C: Äußerer Punkt innere Brillenfassungskante außen rechts
- D: Äußerer Punkt innere Brillenfassungskante innen rechts
- E: Äußerer Punkt innere Brillenfassungskante oben links
- F: Äußerer Punkt innere Brillenfassungskante unten links
- G: Äußerer Punkt innere Brillenfassungskante innen links
- H: Äußerer Punkt innere Brillenfassungskante außen links

Für die Vermessung der Zentrierdaten sind beispielsweise die Messpunkte A, B, C und D notwendig. Die Messpunkte A und B sowie E und F werden beispielsweise für die Bestimmung der Fassungsscheibenbreite herangezogen. Die Strecken zwischen den Pupillenmitten, die durch die Messpunkte I und J gekennzeichnet sind, und die die Brillenfassungsform bestimmenden Strecken, beispielsweise zwischen den Punkten C und D sowie G und H, werden in den stereoskopischen Einzelbildern zur Ermittlung der Glasdurchblickspunkte bei Nullblickrichtung vermessen. Aus den durch die Lage der Messpunkte A bis H sowie deren konstruktiv bekannten Abständen lassen sich mittels der Auswertesoftware auch die Lage der Kameras zur Brillenfassung, beispielsweise die Entfernung und die relative Höhe der Brillenfassung zum Stereokamerasystem bestimmen.

Alle hier dargestellten Merkmale können sowohl einzeln als auch in beliebiger Kombination miteinander erfindungswesentlich sein.

### Bezugszeichenliste

- 1: Proband
- 2: Brillenfassung
- 3: Spiegel
- 4: Stereokamerasystem
- 5: Virtuelle Bildebene
- 6: Nullblickrichtung
- 7: Vertikaler Öffnungswinkel
- 8: Optische Achsen
- 9: Gemeinsames Blickfeld
- A - H: Messpunkte der Brillenfassung
- I: Pupillenmittelpunkt Proband Auge rechts
- J: Pupillenmittelpunkt Proband Auge links

## Patentansprüche

1. Verfahren zur messgenauen Bestimmung von Zentrierdaten eines Probanden zur Anpassung einer Brille an den Probanden unter Verwendung
- einer mindestens zwei Kameras aufweisenden elektronischen Bildaufnahmeeinrichtung,
- einem gegenüber dem Probanden in dessen Augenhöhe senkrecht im Raum angeordneten Spiegel, wobei der Proband eine anatomisch gut angepasste Brillenfassung trägt, und
- einer Datenverarbeitungs- und Datenausgabeeinrichtung, in der die Parameter der Brille und der Brillenfassung, nachfolgend "Brillenfassungsdaten" genannt, hinterlegt sind,
wobei zumindest der die Brillenfassung aufweisende Gesichtsbereich des Probanden durch die elektronische Bildaufnahmeeinrichtung fotografisch erfasst, die gewonnenen Bilddaten mit den in der Datenverarbeitungs- und Datenausgabeeinrichtung hinterlegten Brillenfassungsdaten verglichen werden und mittels einer in der Datenverarbeitungs- und Datenausgabeeinrichtung hinterlegten Software die gewünschten Zentrierdaten als auf den Probanden bezogene Messwerte der Brille ermittelt und ausgegeben werden,
**dadurch gekennzeichnet,**
- **dass** als elektronische Bildaufnahmeeinrichtung ein Stereokamerasystem (4) verwendet wird, das in Höhe des Spiegels (3) symmetrisch zu dessen mittlerer Längsachse fest angeordnet ist und dessen Kameras fest definierte optische Achsen aufweisen,
- **dass** in der Datenverarbeitungs- und Datenausgabeeinrichtung zusätzlich noch die Korrekturdaten der Kameras des Stereokamerasystems (4), ihre Abbildungsmaßstäbe und Informationen zu ihrer Lage im Raum abgelegt sind,
- **dass** der Proband (1) seinen Blick auf das in der virtuellen Bildebene (5) entstandene Spiegelbild seines Kopfes richtet, indem er sich selbst in die Augen schaut,
- **dass** ab diesem Augenblick die Kameras des Stereokamerasystems (4) gleichzeitig ein Bild zumindest von dem mit der Brillenfassung (2) versehenen Bereich des Kopfes des Probanden (1) aufnehmen und
- **dass** mittels der Software und unter Verwendung der hinterlegten Korrekturdaten, Abbildungsmaßstäbe und Lageinformationen die Richtung, Entfernung und höhenmäßige Lage der gewonnenen Bilddaten ermittelt werden, wobei vorhandene lagebedingte Größenänderungen und Verzerrungen durch Korrekturrechnungen gegengerechnet werden.

2. Immobiles Videozentriersystem zur Bestimmung von Zentrierdaten eines Probanden zur Anpassung einer Brille an den Probanden, bestehend aus
- einer mindestens zwei Kameras aufweisenden elektronischen Bildaufnahmeeinrichtung, mittels der zumindest der die Brillenfassung aufweisende Gesichtsbereich des Probanden erfassbar ist,
- einem gegenüber dem Probanden in dessen Augenhöhe senkrecht zur Raumachse angeordneten Spiegel, wobei der Proband eine anatomisch gut angepasste Brillenfassung trägt, und
- einer Datenverarbeitungs- und Datenausgabeeinrichtung, in der die Parameter der Brillengläser und der Brillenfassung, nachfolgend "Brillenfassungsdaten" genannt, hinterlegt sind, die mit der elektronischen Bildaufnahmeeinrichtung derart in Wirkverbindung steht, dass
die vom Gesichtsbereich des Probanden gewonnenen Bilddaten mit den in der Datenverarbeitungs- und Datenausgabeeinrichtung hinterlegten Brillenfassungsdaten verglichen werden und mittels einer in der Datenverarbeitungs- und Datenausgabeeinrichtung hinterlegten Software die gewünschten Zentrierdaten als auf den Probanden bezogene Messwerte der Brille ermittelt und ausgegeben werden,
**dadurch gekennzeichnet,**
**dass** als elektronische Bildaufnahmeeinrichtung ein Stereokamerasystem (4) verwendet wird, deren in ihren Kennwerten und Abbildungseigenschaften bekannten Kameras
- definierte optische Achsen aufweisen,
- in ihrer Lage in einem definierten horizontalen Abstand zueinander und bezüglich der Position des Probanden (1) fest angeordnet sind,
- in gleicher Höhe und in dem definierten horizontalen Abstand zueinander in Höhe des Spiegels (3) jeweils symmetrisch zu dessen mittlerer Längsachse fest angeordnet sind und
- deren Brennweite, horizontaler Abstand und Entfernungsbereich so gewählt ist, dass innerhalb ihres Messbereiches jeder Punkt im Raum von ihnen erfasst wird und
**dass** in der Datenverarbeitungs- und Datenausgabeeinrichtung
- die Kennwerte und spezifischen Abbildungseigenschaften der Kameras,
- die spezifische Abbildungseigenschaft ,Abbildungsgröße der Brillenfassung (2)' in Abhängigkeit der Entfernung der Brillenfassung (2) von der Objektivebene der Kameras und
- die spezifische Abbildungseigenschaft ,Lage der konkreten Höhenbereiche der Brillenfassung (2) im Abbildungsbereich der Kameras' in Abhängigkeit der Entfernung der Brillenfassung (2) von der Objektivebene der Kameras abgelegt sind.

3. Immobiles Videozentriersystem nach Anspruch 2,
**dadurch gekennzeichnet,**
**dass** sich die Kameras in der mittleren Höhe des Spiegels (3) befinden.

4. Immobiles Videozentriersystem nach Anspruch 2 oder 3,
**dadurch gekennzeichnet,**
**dass** die Kameras eine feste Brennweite aufweisen.

5. Immobiles Videozentriersystem nach Anspruch 4,
**dadurch gekennzeichnet,**
**dass** die Kameras die gleiche Brennweite aufweisen.

6. Immobiles Videozentriersystem nach einem der Ansprüche 2 bis 5,
**dadurch gekennzeichnet,**
**dass** die optischen Achsen (8) der Kameras in der horizontalen Ebene in einem bestimmten Winkel geringfügig gegeneinander ausgerichtet sind.

## Claims

1. Method for accurate determination of centring data of a subject for fitting spectacles to the subject using
- an electronic image recording device having at least two cameras,
- a mirror arranged vertically in the room, and opposite and at the eye-height of the subject, whereby the subject wears an anatomically well-fitted spectacle frame, and
- a data processing and data output device, in which the parameters of the spectacles and of the spectacle frame, in the following referred to as "spectacle frame data", are stored,
whereby at least the area with the spectacle frame of the face of the subject is photographically acquired by the electronic image recording device, the obtained image data are compared with the spectacle frame data stored in the data processing and data output device and the required centring data determined and output as measured values of the spectacles related to the subject by means of software stored in the data processing and data output device,
**characterised in that**,
- a stereo camera system (4) is used as electronic image recording device that is fixedly disposed within the height of and symmetrically with respect to the central longitudinal axis of the mirror (3) and the cameras of which have fixedly defined optical axes,
- the correction data of the cameras of the stereo camera system (4), their image scales and information about their position in the room are also additionally stored in the data processing and data output device,
- the subject (1) directs his view onto the mirror image of his head in the virtual image plane (5), looking himself in the eyes,
- from this moment the cameras of the stereo camera system (4) take an image at least of the area of the head provided with the spectacle frame (2) of the subject (1) and
- the direction, distance away and height-related position of the obtained image data are determined by means of the software and using the stored correction data, image scales and position information, whereby existent positionally dependent dimensional changes and distortions are countered through correction calculations.

2. Immovable video centring system for determining centring data of a subject for fitting spectacles to the subject, consisting of
- an electronic image recording device having at least two cameras, by means of which at least the area of face having the spectacle frame of the subject is acquirable,
- a mirror arranged vertically to the room axis, and opposite and at the eye-height of the subject, whereby the subject wears an anatomically well-fitted spectacle frame, and
- a data processing and data output device, in which the parameters of the spectacle lenses and of the spectacle frame, in the following referred to as "spectacle frame data", are stored, that stands in operative connection with the electronic image recording device such that
the image data obtained from the area of the face of the subject are compared with the spectacle frame data stored in the data processing and data output device, and the required centring data are determined and output as measured values of the spectacles related to the subject by means of software stored in the data processing and data output device,
**characterised in that**,
a stereo camera system (4) is used as electronic image recording device, whose cameras, which are known in their characteristic values and imaging properties,
- have defined optical axes,
- are fixedly disposed in their position at a defined horizontal distance from one another and with respect to the position of the subject (1),
- are each fixedly disposed at the same height and at the defined horizontal distance from one another at the height of the mirror (3) symmetrically about its central longitudinal axis and
- the focal length, horizontal distance and focus range of which are selected such that every point within their measuring range in the room is acquired and
that in the data processing and data output device are stored
- the characteristic values and specific imaging properties of the cameras,
- the specific imaging property 'image size of the spectacle frame (2)' as a function of the distance of the spectacle frame (2) from the objective plane of the cameras and
- the specific imaging property 'position of the actual height ranges of the spectacle frame (2) in the imaging region of the cameras' as a function of the distance of the spectacle frame (2) from the objective plane of the cameras.

3. Immobile video centring system in accordance with Claim 2,
**characterised in that**,
the cameras are at the average height of the mirror (3).

4. Immobile video centring system in accordance with Claim 2 or 3,
**characterised in that**,
the cameras have a fixed focal length.

5. Immobile video centring system in accordance with Claim 4,
**characterised in that**,
the cameras have the same focal length.

6. Immobile video centring system in accordance with one of the Claims 2 to 5,
**characterised in that**,
the optical axes (8) of the cameras are aligned at a set angle slightly towards one another in the horizontal plane.

## Revendications

1. Procédé permettant la détermination précise de données de centrage d'un sujet pour l'adaptation de lunettes au sujet en utilisant
- un dispositif d'imagerie électronique présentant au moins deux caméras,
- un miroir disposé à la verticale dans la pièce à hauteur des yeux vis-à-vis du sujet, le sujet portant une monture de lunettes bien adaptée anatomiquement et
- un dispositif de traitement et d'émission des données dans lequel sont mémorisés les paramètres des lunettes et de la monture de lunettes, ci-après dénommés « données de la monture de lunettes »,
au moins la zone du visage du sujet, présentant la monture de lunettes, étant photographiée par le dispositif d'imagerie électronique, les données d'images obtenues étant comparées avec les données de la monture de lunettes mémorisées dans le dispositif de traitement et d'émission des données et les données de centrage souhaitées étant établies et émises comme valeurs de mesure des lunettes se référant au sujet au moyen d'un logiciel mémorisé dans le dispositif de traitement et d'émission des données,
**caractérisé en ce**
- **qu'**un système de caméra stéréo (4) qui est disposé de façon fixe à hauteur du miroir (3) symétriquement à son axe longitudinal médian et dont les caméras présentent des axes optiques définis de façon fixe, est utilisé comme dispositif d'imagerie électronique,
- **que** les données de correction des caméras du système de caméra stéréo (4), leurs rapports de grossissement et informations sur leur position dans la pièce sont également mémorisés dans le dispositif de traitement et d'émission des données,
- **que** le sujet (1) oriente son regard vers l'image réfléchie de sa tête qui apparaît dans le plan d'image virtuel (5) en se regardant lui-même dans les yeux,
- **que** les caméras du système de caméra stéréo (4) enregistrent dès lors simultanément une image au moins de la zone de la tête du sujet (1), dotée de la monture de lunettes (2), et
- **que** la direction, la distance et la position en hauteur des données d'images obtenues sont établies au moyen du logiciel et en utilisant les données de correction, les rapports de grossissement et les informations de position mémorisées, les redimensionnements liés à la position et les distorsions existantes étant compensés par des calculs de correction.

2. Système de centrage vidéo immobile permettant la détermination de données de centrage d'un sujet pour l'adaptation de lunettes au sujet, composé
- d'un dispositif d'imagerie électronique présentant au moins deux caméras, permettant d'enregistrer au moins la zone du visage du sujet, présentant la monture de lunettes,
- d'un miroir disposé perpendiculairement à l'axe spatial à hauteur des yeux vis-à-vis du sujet, le sujet portant une monture de lunettes bien adaptée anatomiquement et
- d'un dispositif de traitement et d'émission des données dans lequel sont mémorisés les paramètres des verres et de la monture de lunettes, ci-après dénommés « données de la monture de lunettes », lequel est en liaison active avec le dispositif d'imagerie électronique de manière à ce que
les données d'images obtenues à partir de la zone du visage du sujet soient comparées avec les données de la monture de lunettes mémorisées dans le dispositif de traitement et d'émission des données et que les données de centrage souhaitées soient établies et émises comme valeurs de mesure des lunettes se référant au sujet au moyen d'un logiciel mémorisé dans le dispositif de traitement et d'émission des données,
**caractérisé en ce**
**qu'**un système de caméra stéréo (4) est utilisé comme dispositif d'imagerie électronique et dont les caméras connues dans ses valeurs caractéristiques et propriétés de représentation
- présentent des axes optiques définis,
- sont disposées de façon fixe dans leur position à une distance horizontale définie l'une par rapport à l'autre et par rapport à la position du sujet (1),
- sont disposées de façon fixe à la même hauteur et à la distance horizontale définie l'une par rapport à l'autre à hauteur du miroir (3) respectivement symétriquement à son axe longitudinal médian et
- dont la distance focale, la distance horizontale et la distance de mise au point sont choisies de façon à ce que chaque point dans la pièce soit enregistré par celles-ci dans leur plage de mesure et
**que**
- les valeurs caractéristiques et les propriétés de représentation spécifiques des caméras,
- la propriété de représentation spécifique « grossissement de la monture de lunettes (2) » en fonction de la distance de la monture de lunettes (2) par rapport au plan de l'objectif des caméras et
- la propriété de représentation spécifique « position des hauteurs concrètes de la monture de lunettes (2) dans la zone de représentation des caméras » en fonction de la distance de la monture de lunettes (2) par rapport au plan de l'objectif des caméras
sont mémorisées dans dispositif de traitement et d'émission des données.

3. Système de centrage vidéo immobile selon la revendication n°2,
**caractérisé en ce**
**que** les caméras se trouvent à la hauteur moyenne du miroir (3).

4. Système de centrage vidéo immobile selon la revendication n°2 ou n°3,
**caractérisé en ce**
**que** les caméras présentent une distance focale fixe.

5. Système de centrage vidéo immobile selon la revendication n°4,
**caractérisé en ce**
**que** les caméras présentent la même distance focale.

6. Système de centrage vidéo immobile selon l'une des revendications n° 2 à n°5,
caractérisé en ce
les axes optiques (8) des caméras sont légèrement alignés l'un par rapport à l'autre à un angle déterminé dans le plan horizontal.
